# EUROPEAN PATENT APPLICATION

(11) **EP 3 940 859 A1**
(43) Date of publication of application: **19.01.2022**
(21) Application number: 20186246.3
(22) Date of filing: 16.07.2020
(51) Int. Cl.: H01M 10/42, H01M 10/63, H01M 10/647, H01M 10/653, H01M 10/6556, H01M 10/6562, H01M 10/6566, H01M 50/20, H01M 50/308, H01M 50/325, A62C 3/07, H01M 10/0525, H01M 10/6552

(54) **BATTERY MODULE**

(71) Applicant: ABB Schweiz AG, 5400 Baden (CH)
(72) Inventor: He, Minglong, 5400 Baden (CH); Schuler, Gabriel, 6415 Arth (CH); Gilgen, Alexander, 5507 Mellingen (CH); Troendle, Pirmin, 79761 Waldshut-Tiengen (DE); Castiglioni, Roberto, 8051 Zurich (CH)
(74) Representative: Qip Patentanwälte Dr. Kuehn & Partner mbB

(57) **Abstract**

A battery module (10) comprises a plurality of battery cells (12), each battery cell (12) having a vent (18), which is adapted to open, when an overpressure builds up in the battery cell (12), and to release vent gases from the battery cell (12); and a vent channel system (22) connecting the vents (18) of the battery cells (12) for guiding and releasing the vent gases. The vent channel system (22) comprises vent heads (20) and vent channels (24); wherein each vent head (20), a respective vent channel (24) and a respective vent (18) are connected in a sealed manner to one another; and wherein the vent channels (24) interconnect the vent heads (20).

## Description

### FIELD OF THE INVENTION

The invention relates to the field of batteries. In particular, the invention relates to a battery module comprising a plurality of battery cells.

### BACKGROUND OF THE INVENTION

The safety of battery modules, in particular of lithium battery modules, is challenged under abusive conditions, as for instance elevated temperature, crushing, penetration, overcharge and overdischarge, short-circuit, etc. Hazards in battery cells may be aggravated in a battery module where quantities of battery cells are connected. The failure of one single battery cell may propagate to the surrounding ones and may result in the failure of the whole battery module.

Thermal runaway propagation in battery modules at the single cell level may be addressed by safety vents, thermal fuses, and shutdown separators. At the battery module level, several safety strategies may be implemented.

In US 9 472 797 B2 and DE 20 2015 009 269 U1, heat shields and flame barriers are used.

CN 205 594 822 U mentions early thermal runaway detection and emergency cooling.

US 9 620 830 B2 describes an advanced cooling system.

US 8 733 465 B1 describes a fluid delivery system for fire extinguishing.

In EP 2 841 171 A1, a use of a fire preventing agent for retarding and/or extinguishing a fire is described.

### DESCRIPTION OF THE INVENTION

Substances emitted from battery cells during a thermal runaway may not only be flammable but also may be harmful to people and environment. Therefore, a better battery module design may be required to manage the thermal energy and toxic substances in a safe and environmentally friendly manner.

It is an objective of the invention to improve the battery safety of a battery module and to reduce the possibility of heat propagation and consequently prevent fire hazards.

This objective is achieved by the subject-matter of the independent claim. Further exemplary embodiments are evident from the dependent claims and the following description.

The invention relates to a battery module comprising a plurality of battery cells, each battery cell having a vent, which is adapted to open, when an overpressure builds up in the battery cell, and to release vent gases from the battery cell. The battery module may be used as electrical energy storage of any mobile device, e.g. an electric vehicle or any stationary application. However, it is also possible that the battery cell arrangement is used in other applications. The battery cells may be Li-ion battery cells. The vent may comprise a foil, which bursts, when the overpressure builds up.

Vent gases may be gases that are generated inside a battery cell during a thermal runaway of the battery cell, i.e. when the battery cell overheats. Vent gases may comprise toxic fluoro-organics and fluoride gases. For example, a considerable amount of HF gas (ca. 2-20 kg) may be emitted in a fire of a 100 kWh Li-ion battery pack.

According to an embodiment of the invention, the battery module comprises a vent channel system connecting the vents of the battery cells for guiding and releasing the vent gases. The vent channel system comprises vent heads and vent channels. Each vent head, a respective vent channel and a respective vent are connected in a sealed manner to one another. The vent channels interconnect the vent heads. When the cell venting is activated, the accumulated gases inside a battery cell may burst out at once. After the venting, the gathered flammable gases may be released at a desired point. The vent gases may be confined within the vent channels of the vent channel system and may be guided to a location outside of the battery module. The vent head for a battery cell may be sealed to the vent of the battery cell. The vent head may receive the vent gases and may distribute them to one or more vent channels connected to the vent head. Also the connection between a vent head and a vent channel may be sealed, such that no vent gases may leave the interconnection.

According to an embodiment of the invention, at least a part of an interior surface of the vent channel system is covered with a heat resistant material. For example, at least some of the vent channels and/or at least some of the vent heads may be covered with such material at their interior side. In particular, critical areas with highest vent gas heat intensity may be covered with a heat resistant material.

Also for heat resistance, a sequence and/or sandwich structure comprising of multiple layers may be used for walls of the vent channel system, in particular for the vent heads and/or the vent channels. Additionally, the material of the vent channels may be made pressure resistance and sealed.

Further, the distance between vent channels and the battery cell may be enlarged to minimize heat conduction to neighboring battery cells.

A toxicity of vent gases may be reduced with filters and/or scrubbers.

According to an embodiment of the invention, the vent channel system comprises a filter unit for filtering substances from the vent gases. Such a filter unit may be connected into a vent channel. A filter unit may be provided for filtering solid particles at the pathway of vent gases. A filter unit may be provided for filtering volatile organic solvents at the pathway of vent gases. A filter unit, as for instance an activated carbon filter, may be provided at an outlet of the vent channel system.

According to an embodiment of the invention, the vent channel system comprises a liquid scrubber unit filled with scrubber liquid. Such a scrubber unit may be connected into a vent channel. In order to reduce or minimize the toxicity of vent gases, one or more liquid scrubber units filled with scrubber liquid, as for instance water or water with additives or specific scrubber liquid, may be provided. A liquid scrubber unit may be positioned between a vent channel and an external burst disc and/or membrane.

According to an embodiment of the invention, at least a part of an interior surface of the vent channel system is coated with a material for absorbing substances from the vent gases and/or with an endothermic coating. Internal walls of a vent channel may be provided with toxicity absorbing or toxicity reducing materials.

According to an embodiment of the invention, a structure frame is provided inside a vent head, which structure frame is coated with a material for absorbing substances from the vent gases and/or with an endothermic coating. For reducing or minimizing the toxicity of vent gases, a structure frame may be provided inside some or all of the vent heads. Openings of the vent channel heads towards the vents may be sealed with a sealing material, such that solely vent heads and structure frames for battery cells, which have a burst vent, are affected by vent gases.

According to an embodiment of the invention, at least a part of an internal volume of the vent channel system is filled with a material absorbing substance from the vent gases. For example, at least a part of an internal volume of the vent channel system, and in particular one, some or all of the vent channels, may be filled with toxicity reducing material.

According to an embodiment of the invention, at least a part of an internal volume of the vent channel system is filled with at least one of an inert gas, a cooling agent, a fire retardant, an oxygen scavenger, and/ or a heat absorbing material. These materials may be used for fire preventing and fire extinguishing. Intumescent fire protection material, in the format of coatings and films, may be provided. Endothermic fire protection measures may be taken based on, for instance, Al(OH)₃, MgCO₃.3H₂O, CaSO₄.2H₂O, having a cooling effect with H₂O or CO₂ release, respectively. Ceramizing and foam-forming coating materials and high-temperature insulation materials may be used for fire protection.

According to an embodiment of the invention, openings of the vent channel heads towards the vents are sealed with a sealing material. Such a sealing material may be a membrane and/or burst disc. The sealing material may be provided additionally to the vent, for example to protect the vent channel system during installation.

Thermal insulation may be provided at various levels: a thermal insulation layer between battery cells to avoid cell-to-cell propagation, thermal insulation around the battery module, fully all-sided, partially only at critical battery module locations, as for instance at the vent side, thermal insulation around the module shell.

According to an embodiment of the invention, an electrical and/or thermal isolator is provided between the vent channel system and the battery cells. Additionally or alternatively, thermal insulators are provided between battery cells and/or between groups of battery cells. Such thermal insulators may be made of sheets of thermally insulating material.

According to an embodiment of the invention, the vent channel system comprises at least one safety vent for releasing vent gases to an outside of the vent channel system. The safety vent may be positioned at an outlet of the vent channel system. The safety vent may be a membrane and/or burst disc.

According to an embodiment of the invention, the safety vent is provided by a vent head, wherein the safety vent may be arranged opposite to the vent of the respective battery cell.

According to an embodiment of the invention, an overpressure valve is arranged in an outlet of the vent channel system. After a specific overpressure has built up in the vent channel system, the overpressure valve opens and releases the filtered vent gases into an environment of the battery module. The overpressure valve may be a mechanical valve, which is triggered mechanically, for example with a piston pressing against a spring.

According to an embodiment of the invention, the vent channels are made from sheet metal. The vent channels and/or the vent heads may be made of sheet metal. It also may be that the vent channels are made of metal pipes, which are connected to the vent heads in a sealed manner, for example by welding.

According to an embodiment of the invention, some or all of the vent channels comprise a kink for mechanically stabilizing the vent channels. The kink may run along an extending direction of the vent channel. In such a way, the vent channel system may withstand high pressures caused by the vent gases released from a battery cell.

These and other aspects of the invention will be apparent from and elucidated with reference to the embodiments described hereinafter.

### BRIEF DESCRIPTION OF THE DRAWINGS

Fig. 1 schematically shows a perspective view of a battery module according to an embodiment of the invention.
Fig. 2 schematically shows parts of a battery module according to an embodiment of the invention.
Fig. 3 schematically shows a vent system for a battery module according to an embodiment of the invention.
Fig. 4 und 5 schematically show exploded views of a battery cell with a vent head for a battery module according to an embodiment of the invention.
Fig. 6 to 9 schematically show cross-sectional views of a battery cell with a vent head for a battery module according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

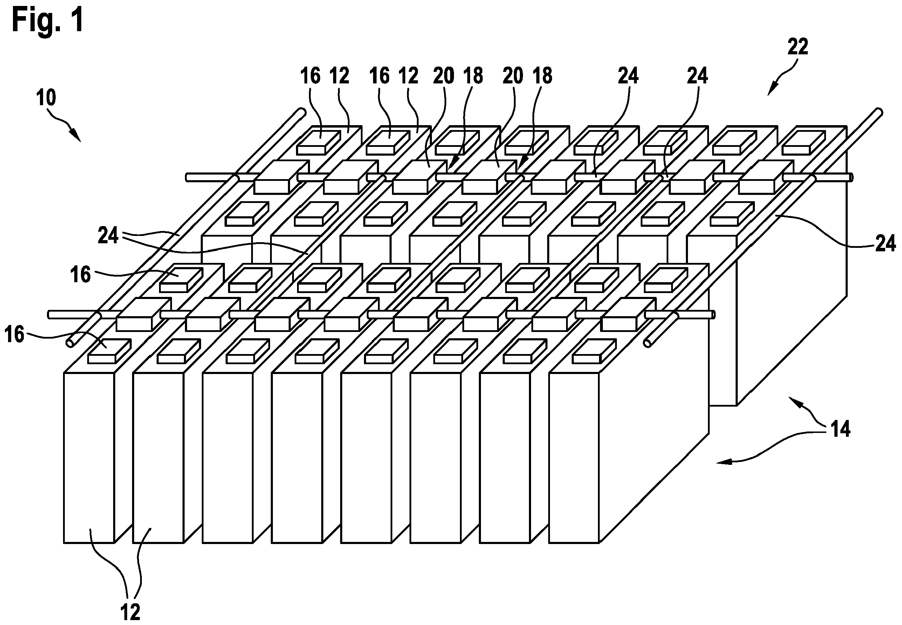

Fig. 1 schematically shows a battery module 10 comprising a plurality of battery cells 12 arranged side by side adjacent to one another in one or more rows 14. As shown, the battery cells 12 may be prismatic cells and/or may have two electrodes 16 on an upper side. These electrodes may be connected. However, this is not shown in Fig. 1. The battery cells 12 may be Li-ion battery cells.

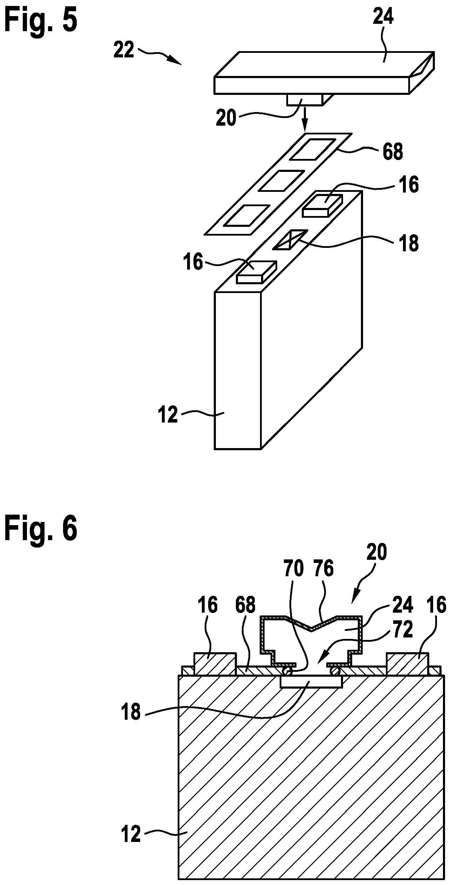

Each battery cell 12 has a vent 18 surmounted by a vent head 20 positioned at the upper side of the battery cell 12. The respective vent 18 is not shown in Fig. 1, but is depicted in Fig. 5 and the following figures. The vents 18 are adapted to open, when an overpressure builds up in the respective battery cell 12, and to release vent gases from the battery cell 12.

The battery module 10 comprises a vent channel system 22 comprising the vent heads 20 for connecting the vents 18 of the battery cells 12 and vent channels 24 for guiding and releasing vent gases. The vent channels 24 interconnect the vent heads 20.

A respective vent channel 24 is sealingly connected with the respective vent head 20, which in turn is connected to a respective vent 18 in a sealed manner.

In the embodiment of Fig. 1, there are vent channels 24 connecting the vent heads 20 of each row 14. There are further vent channels 24 interconnecting vent heads 20 of different rows, which run transversely to vent channels 24 connecting the vent heads 20 of a row 14.

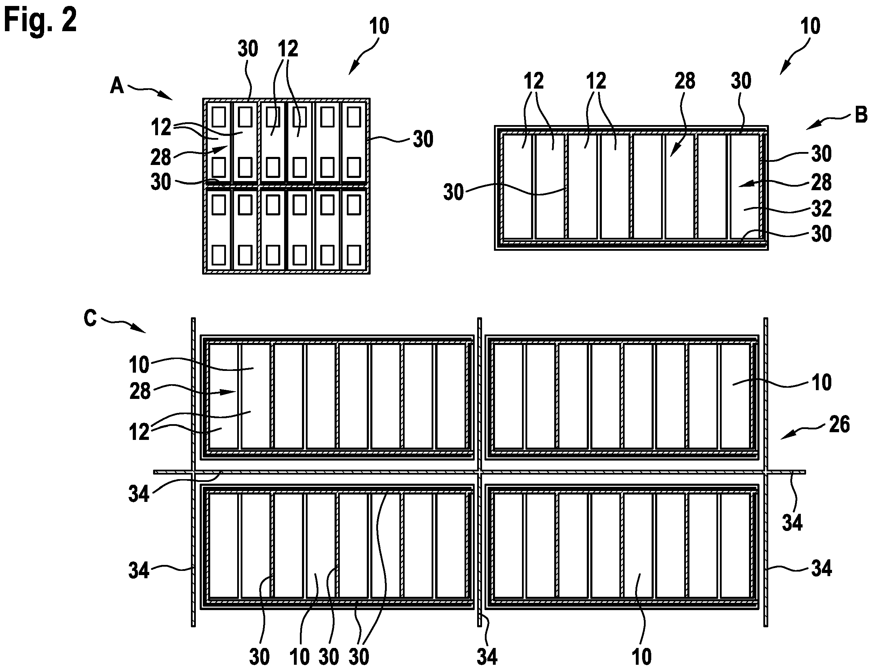

Fig. 2 schematically shows a thermal insulation of the battery module 10 in a top view A, in a side view B and of a pack 26 of battery modules 10 in a side view C.

The battery cells 12 are grouped into groups 28 (here groups 28 of two) and each group 28 is thermally isolated from each other via thermal isolation layers 30, which may be arranged between, at sides, below and above the groups 28. There may be a thermal isolation layer 30 between battery cells 12 and/or between groups 28 to avoid cell-to-cell propagation and/or group-to-group propagation. The thermal insulation may be provided around the complete battery module 10, fully all sides or partially only at critical module sides, for instance the vent side. The thermal isolation layers 30 and the battery cells 12 (together with the vent channel system 22) may be arranged inside a housing 32 of the battery module 10.

Between the battery modules 10 of the pack 26, further thermal isolation layers 34 may be provided, which may be arranged between, at sides, below and above the battery modules 10. The thermal isolation layers 34 may be provided outside of the housings 32.

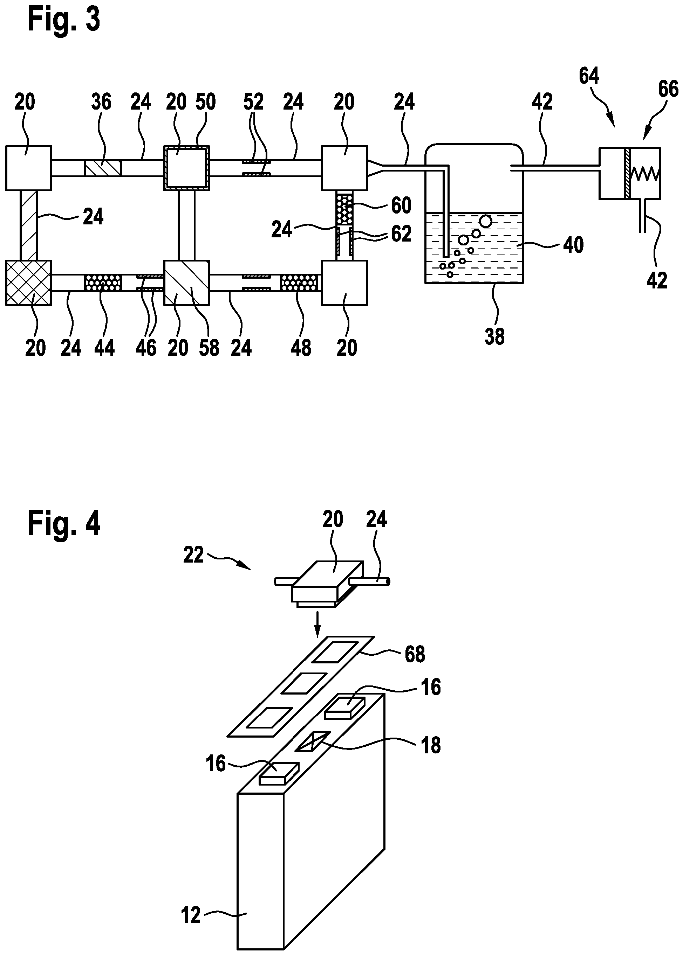

Fig. 3 shows a vent channel system 22, which comprises several measures for processing vent gases.

A filter unit 36 for filtering substances from the vent gases may be interconnected into a vent channel 24. The filter 36 may be adapted for filtering solid particles out of the vent gases leaving a battery cell 12. The filter unit 36 may comprise a porous filtering disc with controlled pore size and thickness, which is placed inside the vent channel 24. Solid particles, e.g. graphite, carbon black, may be blocked by the filtering disc.

The vent channel system 22 may comprise a liquid scrubber unit 38 filled with a scrubber liquid 40. As shown in Fig. 3, the liquid scrubber unit 38 may be interconnected in an outlet 42 of the vent channel system 22. However, a liquid scrubber unit 38 also may be interconnected into a vent channel 24 between two vent heads 20. It also may be that a filter unit 36 is interconnected into the outlet 42.

The scrubber liquid 40 may be adapted for absorbing organic solvents, such as water. The scrubber liquid 40 may be adapted for absorbing toxic fluoride gas species, such as a Ca(HCO₃)₂ solution.

Other possibilities for absorbing organic solvents are a part of vent system 22 filled with a liquid and/or solid absorbing material 44 adapted for absorbing organic solvents, such as a polymer, activated carbon particles and/or polymer gel. It also may be that a part of vent system 22 is coated with a polymer layer 46 adapted for absorbing organic solvents.

Another option for absorbing toxic fluoride gas species is an absorbing material 48 filled into a part of vent system 22, such as MgCO₃.3H₂O.

It is possible that at least a part of an interior surface of the vent channel system 22 is covered with a heat resistant and/or heat absorbing material 50, such as the interior surface of a vent head 20.

It is possible that at least a part of an interior surface of the vent channel system 22 is coated with an endothermic coating 52.

At least a part of an internal volume of the vent channel system 22 may be filled with an inert gas 54, such as N₂, a fire retardant 56 and/or a cooling agent 58.

Also oxygen scavenging may be performed in the vent channel system 22 in order to absorb oxygen generated from decomposition of cathode active battery cell materials, as for instance, decomposition of NMC material. The vent gases may pass a part of the vent channel system filled with an oxygen scavenging material 60, such as solid particles, for instance ascorbate particles. It also may be that an inner wall of a vent channel 24 is coated with a polymer-based oxygen scavenging film 62.

Fig. 3 also shows an exhaust system 64, which may be connected into the outlet 42. The exhaust system 64 comprises an overpressure valve 66 with a piston and a spring. A pressure build-up inside the vent channel system 22 originating from a thermal runaway will push the piston to press the spring. The filtered vent gases may be released through the outlet 42, when a controlled internal pressure is reached.

Fig. 4 and 5 show a battery cell 12 and the part of the vent channel system 22 with the vent head 20 connected to the vent 18 of the battery cell 12 and a vent channel 24. The vent head 20 may be made of sheet metal and may have a larger cross-section as the vent channel 24 as shown in Fig. 4.

As shown in Fig. 4, the vent channel 24, which may be a metal pipe, and the vent head 20 may be sealingly connected by welding, for instance. As shown in Fig. 5, the vent channel 24 and the vent head may be made from one piece, for example from sheet metal.

An electrical and/or thermal isolator 68 is provided between the vent channel system 22 and the battery cells 12. This may be provided by an isolation layer, for example made of a foil, which covers an upper side of the battery cell 12 and/or surrounds the vent head 20.

Fig. 6-9 show cross sections of the battery module 10 through a battery cell 12 and a vent head 20 and/or the vent channel 24 above the battery cell 12.

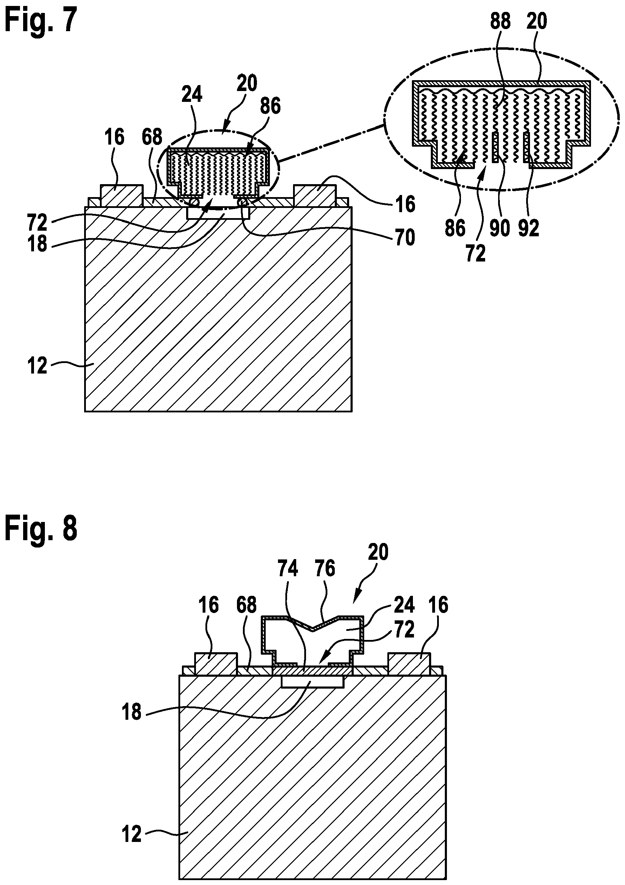

Fig. 6 and 7 show that the vent head 20 is sealingly connected to the vent 18 via a sealing O-ring 70. The O-ring 70 surrounds an opening 72 of the vent head 20 towards the vent 18. Through the opening 72, the vent gases leaving the battery cell 12 through the vent 18 are entering the vent channel system 22.

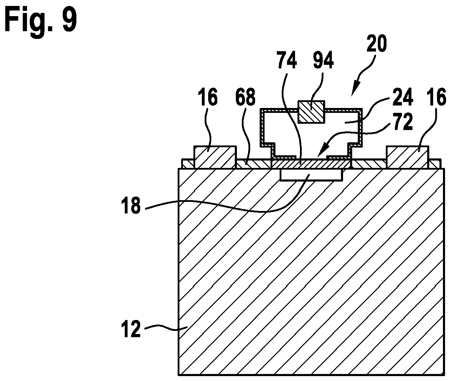

Fig. 8 and 9 show that the opening 72 of the vent head 20, which heads towards the vent 18, are sealed with a sealing material 74. This may be done alternatively or additionally to the O-ring 70. The sealing material 74 may be a polymeric and/or metal membrane and/or foil, which may be directly welded to the vent head 20. By an overpressure caused by vent gases leaving the vent 18, the sealing material 74 breaks to guide vent gases to the vent channel 24.

Fig. 6 and 8 show that an upper side (i.e. the side opposite to the vent 18) of the vent head 20 and/or the vent channel 24, which may have essentially a rectangular section, may be provided with a kink 76 extending in length direction of the vent channel 24 for providing improving structural stability to the vent channel system 22, which has to withstand high pressures.

Fig. 7 shows that a structure frame 86 may be positioned inside the vent channel system 22, for example in one, some or each vent head 20. The structure frame 86 is adapted for absorbing excess heat. The structure frame 86 has an increased contacting surface with the hot emitted substances. The structure frame 86 may comprise a plurality of parallel aligned metal sheets and/or fins 88, which may be corrugated.

The structure frame 86 may be coated with a material 90 for absorbing substances from the vent gases and/or with an endothermic coating 92.

Fig. 9 shows that the vent channel system 22 may comprise a safety vent 94 for releasing vent gases to an outside of the vent channel system 22. A safety vent 94 may be provided by a vent head 20, for example opposite to the vent 18 of the respective battery cell 12.

The vent channel 24 may be filled with a fire retardant 56 and/or cooling agents 58.

Fire extinguishing may be performed in the following way: Firstly, the sealing material 74, such as a membrane, above the vent 18 is broken, and the fire retardant 56 and/or cooling agents 58 may enter the battery cell 12. Secondly, the safety vent 94 bursts due to a pressure build-up inside the vent channel system 22. The fire retardant 56 and/or cooling agents 58 are then released from the vent channel system 22 to an outside to the battery cell 12. Healthy battery cells 12 and their vent heads 20 may remain in integrity.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: battery module
- 12: battery cell
- 14: row
- 16: electrode
- 18: vent
- 20: vent head
- 22: vent channel system
- 24: vent channel
- 26: pack of battery modules
- 28: groups of battery cells
- 30: thermal isolation layer
- 32: housing
- 34: thermal isolation layer
- 36: filter unit
- 38: liquid scrubber unit
- 40: scrubber liquid
- 42: outlet
- 44: absorbing material
- 46: polymer layer
- 48: absorbing material
- 50: heat resistant and/or heat absorbing material
- 52: endothermic coating
- 54: inert gas
- 56: fire retardant
- 58: cooling agent
- 60: oxygen scavenging material
- 62: oxygen scavenging film
- 64: exhaust system
- 66: valve
- 68: electrical and/or thermal isolator
- 70: O-ring
- 72: opening
- 74: sealing material
- 76: kink
- 86: structure frame
- 88: metal sheet and/or fin
- 90: absorbing coating
- 92: endothermic coating
- 94: safety vent

## Claims

1. A battery module (10) comprising:
a plurality of battery cells (12), each battery cell (12) having a vent (18), which is adapted to open, when an overpressure builds up in the battery cell (12), and to release vent gases from the battery cell (12);
a vent channel system (22) connecting the vents (18) of the battery cells (12) for guiding and releasing the vent gases;
wherein the vent channel system (22) comprises vent heads (20) and vent channels (24);
wherein each vent head (20), a respective vent channel (24) and a respective vent (18) are connected in a sealed manner to one another;
wherein the vent channels (24) interconnect the vent heads (20).

2. The battery module (10) of claim 1,
wherein at least a part of an interior surface of the vent channel system (22) is covered with a heat resistant material (50).

3. The battery module (10) of claim 1 or 2,
wherein the vent channel system (22) comprises at least one of the following:
a filter unit (36) for filtering substances from the vent gases;
a liquid scrubber unit (38) filled with scrubber liquid (40).

4. The battery module (10) of one of the previous claims,
wherein at least a part of an interior surface of the vent channel system (22) is coated with a material (46, 62, 90) for absorbing substances from the vent gases and/or with an endothermic coating (52, 92).

5. The battery module (10) of one of the previous claims,
wherein a structure frame (86) is provided inside a vent head (20), which structure frame is coated with a material (90) for absorbing substances from the vent gases and/or with an endothermic coating (92).

6. The battery module (10) of one of the previous claims,
wherein at least a part of an internal volume of the vent channel system (22) is filled with a material (44, 48, 60) absorbing substances from the vent gases.

7. The battery module (10) of one of the previous claims,
wherein at least a part of an internal volume of the vent channel system (22) is filled with at least one of:
an inert gas (54);
a cooling agent (58);
a fire retardant (56);
an oxygen scavenger (60);
a heat absorbing material (50).

8. The battery module (10) of one of the previous claims,
wherein openings (72) of the vent channel system (22), which head towards the vents, (18) are sealed with a sealing material (74).

9. The battery module (10) of one of the previous claims,
wherein an electrical and/or thermal isolator (68) is provided between the vent channel system (22) and the battery cells (12).

10. The battery module (10) of one of the previous claims,
wherein thermal insulators (30, 34) are provided between battery cells (12) and/or between groups (28) of battery cells (12).

11. The battery module (10) of one of the previous claims,
wherein the vent channel system (22) comprises at least one safety vent (94) for releasing vent gases to an outside of the vent channel system (22).

12. The battery module (10) of claim 11,
wherein the safety vent (94) is provided by a vent head (20) opposite to the vent (18) of the respective battery cell (12).

13. The battery module (10) of one of the previous claims,
wherein an overpressure valve (66) is arranged in an outlet (64) of the vent channel system (22).

14. The battery module (10) of one of the previous claims,
wherein the vent channels (24) are made from sheet metal and comprise a kink (76) for mechanically stabilizing the vent channels (24).

15. The battery module (10) of one of the previous claims,
wherein the battery cells (12) are Li-ion battery cells.
